# EUROPEAN PATENT APPLICATION

(11) **EP 1 148 684 A2**
(43) Date of publication of application: **24.10.2001**
(21) Application number: 01109421.6
(22) Date of filing: 20.04.2001
(51) Int. Cl.: H04L 27/26, H04B 7/08

(54) **Antenna switching in a receiver for digital broadcasts**

(30) Priority: 21.04.2000 JP 2000120814
(71) Applicant: Pioneer Corporation, Meguro-ku, Tokyo (JP)
(72) Inventor: Tokoi, Akinori, Pioneer Corp. Kawagoe Works, Kawagoe-shi, Saitama (JP); Kawakami, Yasuo, Pioneer Corp. Kawagoe Works, Kawagoe-shi, Saitama (JP)
(74) Representative: Klingseisen, Franz, Dipl.-Ing.

(57) **Abstract**

A digital broadcasting receiver having a diversity function is provided that can switch and select an antenna having a good reception condition from among a plurality of antennas while preventing unwanted omission of reception data in digital broadcasting. A guard interval in a reception signal is detected by utilizing a correlation signal of an orthogonal component extracted from the reception signal. Switching of the reception antennas is conducted only within such a guard interval period to prevent unwanted omission of an effective symbol in the reception signal.

## Description

### BACKGROUND OF THE INVENTION

### 1. Field of the Invention

This invention relates to a digital broadcasting receiver having a diversity function.

### 2. Description of the Related Art

A space diversity system that selects an antenna capable of providing a better reception condition from among a plurality of reception antennas when a reception condition of radio waves gets extremely deteriorated during reception has been broadly utilized in the past in broadcasting receivers. When such a diversity operation is conducted, fall-off of reception signals during switching of the antennas must be prevented. Therefore, conventional television broadcasting receivers conduct the switching operation by utilizing a vertical retrace line interval during which video information is not contained in video signals.

On the other hand, television broadcasting is expected to shift to digital broadcasting. Then, signals to be transmitted turn to digital data that are continuous in a time series. In this case, interruption of signals such as the retrace line interval in analog broadcasting does not exist, and it is not so easy to catch an antenna switching timing.

### OBJECTS AND SUMMARY OF THE INVENTION

It is an object of the present invention to provide a digital broadcasting receiver capable of executing diversity reception by switching reception antennas without inviting an data error even in digital broadcasting.

According to the present invention, there is provided a digital broadcasting receiver including a plurality of antennas; antenna switching means for conducting a switching operation for selecting at least one of the antennas; switching controlling means for controlling the switching operation; and frequency correcting means for correcting a frequency error of an orthogonal carrier wave on the basis of a correlation function determined from the orthogonal carrier wave contained in a reception signal received by the antennas; wherein the switching controlling means detects a guard interval contained in the reception signal by using the correlation function, and conducts the switching operation within a period when the detected guard interval lasts.

### BRIEF DESCRIPTION OF THE DRAWINGS

Fig. 1 is a block diagram showing a construction of an ISDB-T broadcasting receiver according to an embodiment of the present invention.
Fig. 2 is a time chart showing the relation between a reception signal in the receiver shown in Fig. 1 and a correlation signal generated in a narrow band AFC circuit.
Fig. 3 is a time chart showing a generation process of a switching timing signal in the receiver shown in Fig. 1.

### DETAILED DESCRIPTION OF THE PREFERRED EMBODIMENT

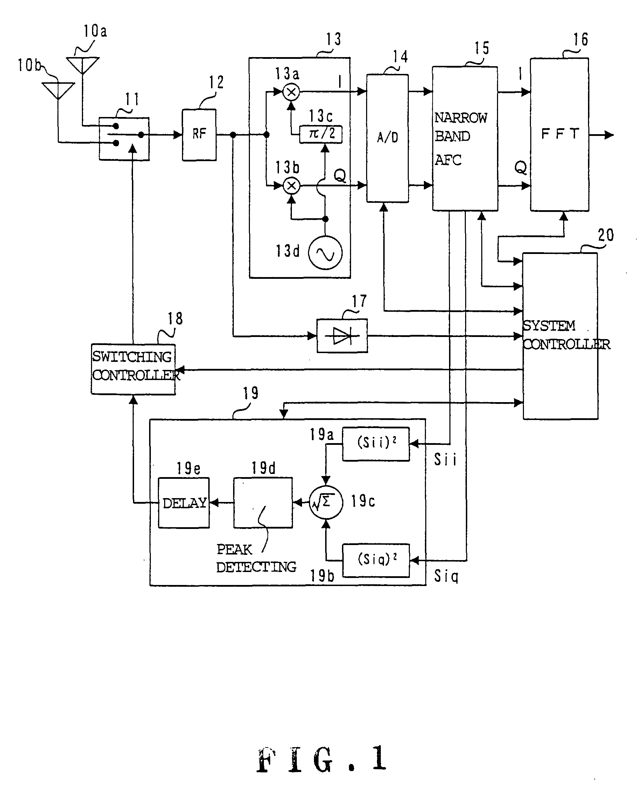

Fig. 1 is a block diagram showing a construction of an ISDB-T (Integrated Service Digital Broadcasting) receiver according to the present invention.

Referring to Fig. 1, reception antennas 10a and 10b are compact antennas such as rod antennas or plane antennas. These antennas receive radio waves from an ISDB-T broadcasting station. The reason why a plurality of antennas is provided is to attain space diversity by utilizing the difference of antenna directivity resulting from a positional difference of the antennas. Even when the radio waves are broadcast from the same broadcasting station, a radio wave propagation condition becomes different depending on multi-path waves, fading, and so forth if the spatial arrangements of the reception antennas are different. In consequence, the phase of the radio wave received by each antenna and its frequency spectrum become different in some cases. The construction using a plurality of antennas can select the antenna having the best reception condition. Incidentally, the principle of space diversity does not limit the number of antennas to two antennas shown in Fig. 1, and three or more antennas can be therefore employed.

An antenna switching circuit 11 is a radio frequency signal switching circuit that selects one of a plurality of reception antennas on the basis of a antenna switching signal from a switching controller 18. Generally, this circuit selects an antenna having a high antenna gain. The construction of the antenna switching circuit 11 is designed in accordance with the number of antennas used.

A radio frequency signal circuit 12 executes processing such as amplification, frequency conversion, etc, for a reception radio wave inputted through the antenna switching circuit 11. This radio frequency signal circuit 12 performs a front-end function of the receiver. An orthogonal signal extractor 13 is mainly formed of frequency mixer 13a and 13b, a phase shifter 13c and a local oscillator 13d.

The radio waves for ISDB-T broadcasting are generally subjected to OFDM (Orthogonal Frequency Division Multiplex) modulation. This OFDM modulation divides a time series of data to be transmitted into a large number of time series in a direction of the time axis. It is a modulation system that applies digital modulation such as QPSK or QAM to these divided time series by using a large number of carrier waves that orthogonally each other. To demodulate the OFDM modulation signals superposed with the reception radio waves, therefore, it is necessary to extract the orthogonal signal components of the carrier waves.

The orthogonal signal extractor 13 divides the output of the local oscillator 13d into two outputs. The phase shifter 13c delays by π/2 the phase of one of the outputs. In other words, the orthogonal signal extractor 13 prepares two kinds of local carrier waves having the phases that are mutually different by 90 degrees. The frequency mixer 13a and 13b multiply these two local carrier waves by the output signal from an RF signal circuit 12, respectively. In this way, two orthogonal signal components (hereinafter called "I signal" and "Q signal", respectively) that constitute base band signals contained in the reception radio wave signals are extracted.

The I signal and the Q signal that are extracted by the orthogonal signal extractor 13 are converted by an analog/digital converter 14 to discrete sampling pulse time series I(n) and Q(n), respectively. These I(n) and Q(n) are then supplied to a narrow band AFC (Automatic Frequency Controlling) circuit 15.

The outline of the narrow band AFC circuit 15 is as follows.

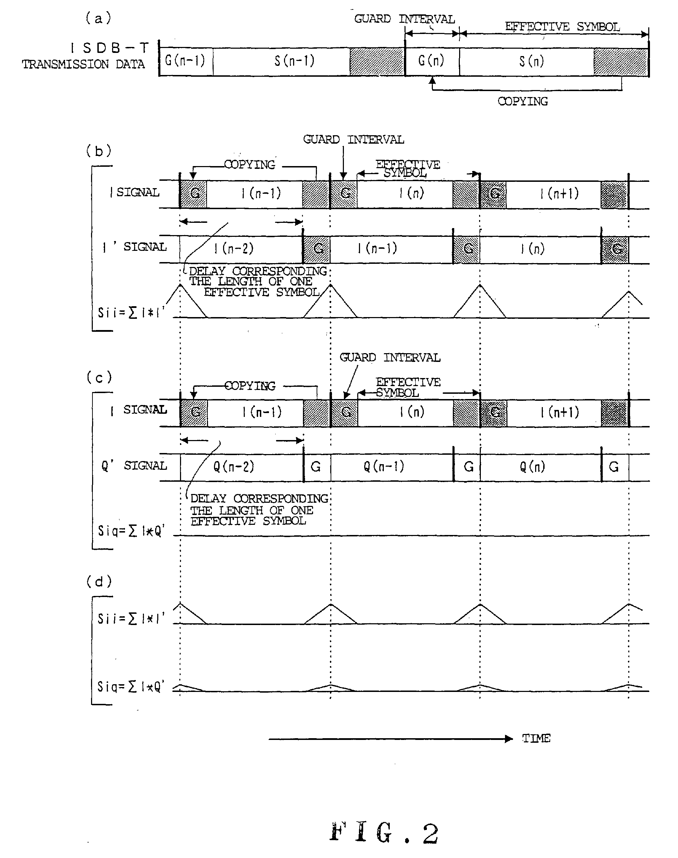

As described above, the base band signal of the OFDM modulation wave is continuation of symbol trains (hereinafter called "effective symbol S (n)") generated by applying digital modulation processing such as QPSK or QAM to the data time series obtained by digitizing analog signals such as video, audio, and etc, by using a large number of orthogonal carrier waves. Incidentally, the effective symbol S (n) includes I (n) and Q (n) described above. Practical ISDB-T broadcasting does not broadcast only the effective symbol S (n) but does alternately the effective symbols S (n) and guard intervals G (n) as shown in Fig. 2 (a).

The term "guard interval" G (n) represents a portion provided to the leading part of the effective symbol S (n) by copying the signal of 1/4 to 1/32 of each effective symbol S (n) from its trailing part. Since the guard intervals G (n) are disposed, redundancy of the transmission data increases, and hence, transmission efficiency of the data decrease. However, the guard intervals can prevent delay interference between the effective symbols due to reflected waves such as multi-path waves. In consequence, a so-called "ghost image" as the most critical problem of television broadcasting waves can be prevented.

The transmission data can be reproduced on the receiver side by demodulating only the effective symbols S (n) other than the guard intervals G (n). Therefore, the receiver sets windows containing only the effective symbols in the direction of the time axis at the time of demodulation. Later-appearing fast Fourier transform is conducted for only the reception signals falling within each window to demodulate the reception data.

The narrow band AFC circuit 15 computes various correlation values on the basis of the time series data I (n) and Q (n) supplied from the analog/digital converter 14. In other words, the narrow band AFC circuit 15 generates I (n)' which is generated by delaying I(n) by the length of one effective symbol. In this instance, I (n) is one of the orthogonal components contained in the effective symbol S (n). Then the narrow band AFC circuit 15 determines a correlation function Sii between I (n) and I (n)'. The narrow band AFC circuit 15 determines likewise a correlation function Siq between I (n) and Q (n)' obtained by delaying Q (n) by the length of one effective symbol.

The transmission signal contains the guard interval as described above. Therefore, the rearmost trailing part of I(n) is the same as the leading part of I (n)' obtained by delaying I (n) by the length of one effective symbol. I (n) and I (n)' exhibit strong correlation at such parts. In other words, Sii has its peak value during the period in which the rearmost trailing part of I (n) and the leading part of I (n)' overlap with each other, that is, at the boundary of the symbols, as shown in Fig. 2 (b). Because of the orthogonal property between the I signal and the Q signal, the time series data I(n) and Q(n), too, have orthogonal property. Therefore, Siq as the correlation function of I (n) and Q (n)' remains always 0 throughout the whole period of the time axis as shown in Fig. 2 (c).

However, OFDM modulation is a modulation system that uses a large number of carrier waves orthogonal one another. Therefore, if any error of the carrier wave frequency occurs between the transmission side and the reception side, synchronization collapses among the symbols. In consequence, the peak value of Sii occurring at each symbol boundary decreases as shown in Fig. 2 (d). Since the orthogonal property of each carrier wave also collapses due to the error of the carrier wave frequency, the orthogonal property between I (n) and Q (n)' collapses, too. Therefore, a peak occurs at each symbol boundary for Siq that should originally remain 0 throughout the whole period of the time axis.

The narrow band AFC circuit 15 detects the change of Sii and Siq induced by such a frequency error. Arc tangent of both of them is determined and is used as a parameter. Using this parameter, the narrow band AFC circuit 15 executes feedback control to establish frequency synchronization of the I signal and the Q signal so as to minimize the frequency error.

The I signal and the Q signal after frequency synchronization, as the outputs from the narrow band AFC circuit 15 (corresponding to I (n) and Q (n) in practical processing), are supplied to the fast Fourier transform circuit 16. The fast Fourier transform circuit 16 executes a Fourier transform processing for the I signal and the Q signal and demodulates the digital data contained in each carrier wave of OFDM. The demodulated data is then supplied to an output processing circuit (not shown) such as a de-interleave circuit, an error correction circuit, and a final reception processing is conducted.

The level detector 17 detects the output signal from the radio frequency signal circuit 12 by AM-detection, and thus detects the reception signal level. The level detector 17 supplies the detection value to a system controller 20.

A switching controller 18 supplies an antenna switching signal to the antenna switching circuit 11 on the basis of the switching instruction from the system controller 20 and a switching timing signal from a switching timing generator 19.

The switching timing generator 19 is mainly formed of squaring circuits 19a and 19b, a square-root addition circuit 19c, a peak detecting circuit 19d and a delay circuit 19e. The switching timing generator 19 generates the switching timing signal to be supplied to the switching controller 18 by using the correlation functions Sii and Siq generated by the narrow band AFC circuit 15.

The system controller 20 is mainly formed of a microcomputer and collectively controls the apparatus of this invention as a whole.

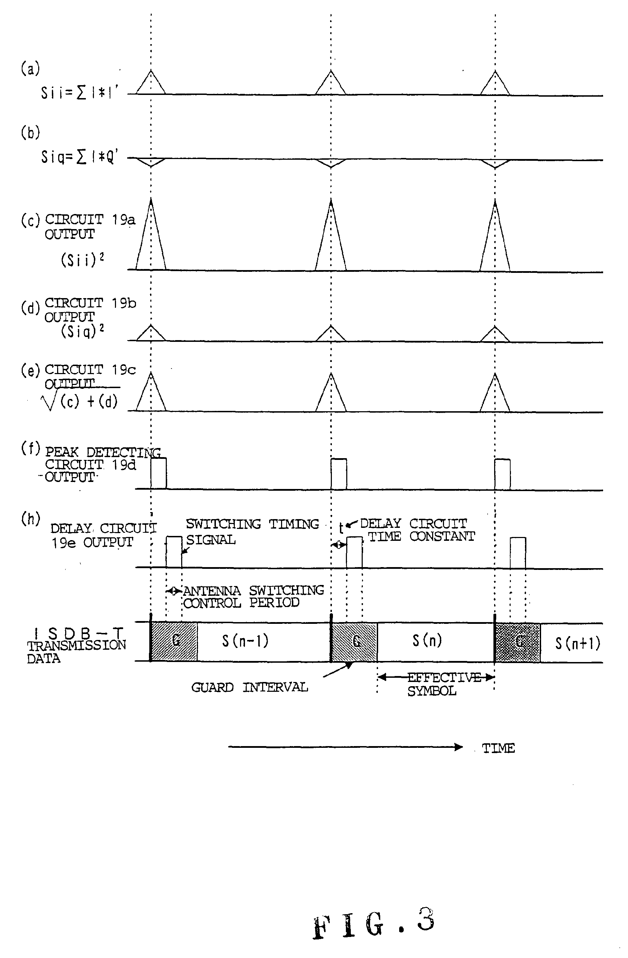

The correlation functions Sii and Siq generated by the narrow band AFC circuit 15 are supplied from the narrow band AFC circuit 15 to the switching timing generator 19. The squaring circuits 19a and 19b square the values of Sii and Siq. Each of the square values of Sii and Siq so obtained is supplied to the square-root addition circuit 19c, that then adds them and executes squaring processing. Time charts of Figs. 3 (a) to 3 (e) show the relation among the correlation functions Sii and Siq and the output signals of the respective circuits 19a to 19c.

The switching timing generator 19 determines the root mean square value of the correlation functions Sii and Siq in order to prevent the value of Sii or Siq from becoming negative or 0 due to the error of the carrier wave frequency. In other words, both Sii and Siq exhibit the peak values at each symbol boundary. But, the amplitude of the peak value greatly changes depending on the error of the carrier wave frequency. Therefore, this embodiment computes always the root mean square value of Sii and Siq so that the peak value of the correlation function can be extracted reliably. When the peak value can be extracted, the symbol boundary in the reception signal can be detected, too. In other words, the boundary between the previous effective symbol and the guard interval at the leading part of the next symbol can be extracted.

The peak detecting circuit 19d has the function of outputting a pulse having a predetermined pulse width when the amplitude of its input value exceeds a predetermined threshold value. Therefore, when the signal from the square-root addition circuit 19c is supplied to the peak detecting circuit 19d, its output has a waveform shown in Fig. 3 (f). In other words, a pulse time series that rises at the boundary between the effective symbol and the next guard interval, and has a cyclic length corresponding to one symbol appears at the output.

The delay circuit 19e is a pulse delay circuit using a digital logic element such as a shift register or a flip-flop. The delay circuit 19e generates a pulse signal that is delayed by a predetermined time from the rise of the input pulse signal. Therefore, when the pulse signal from the peak detecting circuit 19d is supplied to the delay circuit 19e, the pulse signal appears at the output of the delay circuit 19e as shown in Fig. 3 (h). When the delay circuit 19e executes the delay processing, the rise period of the pulse signal generated by the peak detecting circuit 19d, that is, the ON period of the pulse signal, can be shifted to the substantial center of the guard interval. The output pulse signal of the delay circuit 19e is supplied as the switching timing signal to the switching controller 18.

The switching controller 18 supplies the antenna switching signal to the antenna switching circuit 11 only during the period in which the switching timing signal supplied from the switching timing generator 19 is ON.

As can be seen clearly from Fig. 3 (h), the switching timing signal is ON during the guard interval. Therefore, the switching controller 18 supplies the antenna switching signal to the antenna switching circuit 11 only within the guard interval period. In other words, the antenna switching circuit 11 can reliably conduct the antenna switching operation within the guard interval period, and can reliably prevent fall-off of the data of the effective symbol portion due to switching of the antennas.

The system controller 20 judges the reception signal level from each antenna and gives an instruction to the switching controller 18 for selecting the antennas 10a and 10b to be switched so that the antenna switching circuit 11 can switch the antennas 10a and 10b. When the switching instruction from the system controller 20 indicates the antenna 10a, the switching controller 18 supplies the antenna switching signal for selecting the antenna 10a to the antenna switching circuit 11 only during the period in which the switching timing signal is ON. Receiving this antenna switching signal, the antenna switching circuit 11 changes over the radio frequency switch to the antenna 10a. When the antenna switching circuit 11 has set the antenna 10a so far, the practical switching operation is not conducted even when such an antenna switching signal is supplied from the switching controller 18.

The antenna switching circuit 11 keeps the connection state until the next antenna switching signal is supplied from the switching controller 18.

Various methods are available for judging the signal level from each antenna, and giving the switching instruction in the system controller 20. For example, the antenna switching circuit 11 alternately changes over both antennas during the guard interval period and while the switching timing signal is ON. Then, system controller 20 alternately detects the signal levels from both antennas through the level detector 17. The system controller 20 compares and judges these detection results and outputs the switching instruction. The following procedures may be employed as another method. The controller 20 periodically detects the signal level of the antenna on the connected side through the level detector 17. Only when the detecting level is lower than the predetermined level, the system controller 20 gives the switching instruction to the antenna different from the connected side.

Although the embodiment given above represents the diversity system that changes over a plurality of antennas, the present invention is not particularly limited to such a diversity system. For example, in a receiver having a plurality of detection/demodulation parts, demodulation signals from a plurality of detection/demodulation parts may be switched.

Although the foregoing embodiment represents the ISDB-T receiver, by way of example, the present invention is not particularly limited thereto. In other words, the receiver may be receivers for receiving digital broadcasting of the types which have the guard interval period in the transmission signals.

One screen of a television picture generally comprises two fields. In ISDB-T broadcasting, TMCC(Transmission and Multiplexing Configuration Control) signal as a kind of a pilot signal contains a sync signal representative of the start of one field. Therefore, it is also possible to detect such a sync signal and to add it to the condition of switching the antennas. When such a switching condition is added, switching of the antennas can be inhibited during the reception of one-field data. In consequence, the video data of one field can be prevented from becoming useless during reception.

As described above in detail, the present invention can reliably detect the guard interval of the reception signal, and can prevent the occurrence of the data error because the diversity processing is executed during this period.

It is understood that the forgoing description and accompanying drawing set forth the preferred embodiments of the invention at the present time. Various modification, additions and alternative designs will, of course, become apparent to those skilled in the art in light of the forgoing teachings without departing from the spirit and scope of the disclosed invention. Thus, it should be appreciated that the invention is not limited to the disclosed embodiments but may be practiced within the full scope of the appended claims.

## Claims

1. A digital broadcasting receiver comprising:
a plurality of antennas;
an antenna switching part for conducting a switching operation for selecting at least one of said antennas;
a switching controlling part for controlling said antenna switching part; and
a frequency correcting part for correcting a frequency error of an orthogonal carrier wave on the basis of a correlation function determined from said orthogonal carrier wave contained in a reception signal received by said antennas;
wherein said switching controlling part detects a guard interval contained in said reception signal by using said correlation function, and conducts said switching operation within a time period when the detected guard interval lasts.

2. A digital broadcasting receiver according to claim 1, wherein said switching controlling part computes a square mean value of said correlation function, and detects said guard interval on the basis of an amount of a peak of the computed value.
